# FASCICULE DE BREVET EUROPEEN

(11) **EP 2 213 517 B1**
(45) Date de publication et mention de la délivrance du brevet: **17.12.2014**
(21) Numéro de dépôt: 10151574.0
(22) Date de dépôt: 25.01.2010
(51) Int. Cl.: B60R 11/02

(54) **Dispositif sécurisé pour le support d'un casque**
Halterung für Kopfhörer
Device for holding a headphone

(30) Priorité: 30.01.2009 FR 0900404
(43) Date de publication de la demande: 04.08.2010
(73) Titulaire: Airbus Operations (Société par actions simplifiée), 31060 Toulouse (FR)
(72) Inventeur: Le Texier, Maxime, 31400, TOULOUSE (FR); Saint-Marc, Laurent, 31100, TOULOUSE (FR); Renier, Raphael, 31700, BLAGNAC (FR)
(74) Mandataire: Gicquel, Olivier Yves Gérard

(56) Documents cités:
- FR-A- 1 163 467
- FR-A- 1 481 309
- US-A- 2 258 200
- US-A- 4 720 028
- US-A- 5 507 423
- US-A- 5 890 689
- US-A1- 2002 113 465
- US-B1- 6 397 435

## Description

La présente invention appartient au domaine des dispositifs utilisés pour le support d'un casque à bandeau serre-tête sur une structure lorsque le casque n'est pas utilisé. L'invention trouve plus particulièrement application pour le support de tels casques sur des structures de véhicules soumis à de fortes accélérations verticales et / ou des vibrations, qui sont susceptibles de provoquer l'éjection du casque hors du support.

Le domaine d'application préféré de l'invention, qui sera décrit plus précisément dans la présente description, est celui des aéronefs. L'invention s'applique cependant également de la même manière à tout autre véhicule susceptible d'être soumis à des vibrations, tels par exemple que des véhicules de chantier.

L'invention s'applique aussi bien aux casques audio qu'aux casques radio ou aux casques anti-bruit ou à tout autre type de casque muni d'un bandeau serre-tête utilisés dans les véhicules.

A bord des véhicules, plus particulièrement à bord des aéronefs, les pilotes utilisent un casque radio leur permettant de communiquer avec le reste de l'équipage et les services du contrôle aérien, tout en restant isolés du bruit extérieur pour une meilleure qualité d'écoute. Le pilote étant conduit à mettre et à retirer occasionnellement son casque radio au sol et ou au cours d'un vol, ce casque est préférablement posé à proximité du pilote, sans pour autant occasionner de gêne pour l'accès du pilote aux organes de pilotage et aux panneaux de commande et sans que celui-ci ne puisse tomber et soit difficile à reprendre lorsque le pilote en a besoin.

De préférence, le casque est posé sur un support situé au niveau des habillages du poste de pilotage, de préférence dans une zone à hauteur de tête du pilote, lorsqu'il est en position assise.

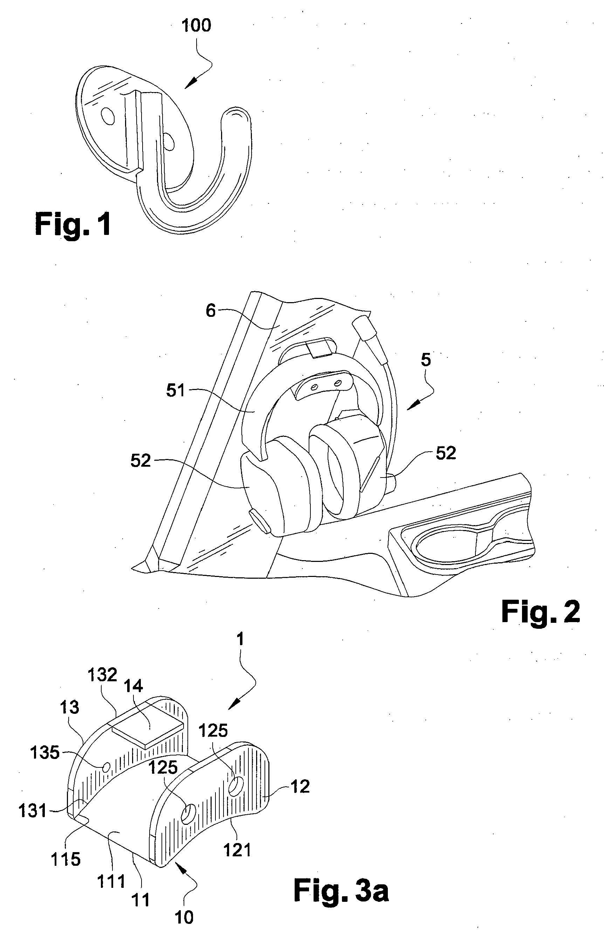

Pour poser et tenir le casque, les supports existants utilisés à bord des aéronefs sont en général des supports du type des crochets 100, métalliques ou en matériau composite, tels que par exemple celui illustré figure 1.

Cependant, ces supports peuvent s'avérer insuffisants pour assurer le maintien du casque lorsque l'avion est soumis à des accélérations verticales et ou des turbulences car le casque peut à ce moment là être éjecté du support et retomber dans un endroit plus ou moins accessible par le pilote depuis son siège, voire de manière inopportune soit sur le pilote lui-même, soit sur des équipements de bord, occasionnant une gêne éventuelle alors qu'une attention particulière est recommandée de la part du pilote durant ces phases de vol.

Les documents US2002/113465, voir préambule de la revendication 1 de l'invention présente, US5 507 423 et US4 720 028 décrivent des crochets pour suspendre des vêtements dans un véhicule.

La présente invention vise à améliorer les conditions de pilotage des pilotes pendant le vol et à assurer l'accessibilité du casque en toutes circonstances, principalement lors de turbulences et ou de fortes accélérations verticales.

Pour cela, elle propose un véhicule équipé sur au moins une paroi d'un dispositif pour le support d'un casque, selon la revendication 1.

Ledit dispositif comporte un élément anti-dégagement obturant l'ouverture sur au moins une largeur suffisante pour empêcher le passage d'un bandeau du casque à travers l'ouverture. Cet élément anti-dégagement est apte à être déplacé par une action manuelle, directement sur l'élément anti-dégagement ou par l'intermédiaire du casque, dans une position de libération pour permettre le passage du bandeau à travers ladite ouverture, le socle étant fixé transversalement à la paroi par l'extrémité arrière.

Cet élément anti-dégagement bloque avantageusement le bandeau du casque dans sa position supportée par le crochet, et ce tant qu'un effort volontaire suffisamment important n'est pas exercé sur lui en libération de l'ouverture. Il est avantageusement configuré de manière à résister à des chocs ponctuels exercés sur lui par le casque secoué par des mouvements du véhicule. Le casque est ainsi maintenu en permanence sur le crochet. Il est toujours facilement accessible à l'utilisateur et il ne risque en outre pas de gêner le pilote durant les opérations de pilotage, en étant éjecté du crochet n'importe où dans le poste de pilotage.

Dans un exemple de réalisation, l'élément anti-dégagement est une languette s'étendant sensiblement parallèlement au socle.

Dans des modes de réalisation préférés de l'invention, l'élément anti-dégagement est apte à être replié en direction du socle de manière à libérer l'ouverture du passage du bandeau, et / ou déplié à l'opposé de ce socle, pour le même résultat.

Selon une caractéristique préférée de l'invention, l'élément anti-dégagement occupe une partie seulement de la largeur I de l'ouverture entre l'extrémité arrière du socle et l'organe de maintien.

De préférence, l'élément anti-dégagement est réalisé dans un matériau présentant des propriétés de déformation élastique.

Dans une forme de réalisation, le dispositif comporte un organe interne de fixation du socle à la paroi, solidaire du socle au niveau de l'extrémité arrière de ce dernier.

De préférence, afin d'assurer une meilleure réception du bandeau sur le socle, ledit socle est une plaque conformée pour épouser localement la forme du bandeau du casque.

De préférence, afin de diminuer le risque de blessure pour le pilote, l'organe externe de maintien présente un contour arrondi.

Dans un mode de réalisation amélioré, le socle est au moins en partie rétractable à l'intérieur d'un caisson du dispositif destiné à être disposé dans une épaisseur de la paroi. Le caisson est solidaire du socle par l'extrémité arrière dudit socle. Le socle est de préférence monté coulissant dans ledit caisson formant glissière. Le dispositif comporte en outre des moyens automatiques de rétractation, de préférence sensiblement entièrement, du socle dans le caisson, de manière à amener, en absence de sollicitation externe et de présence d'un casque, l'organe externe de maintien à une distance de l'extrémité arrière du socle correspondant à une largeur I de l'ouverture au moins inférieure à une largeur du bandeau du casque destiné à être maintenu dans le dispositif, et qui sont étirables de manière à déployer le socle hors du caisson de sorte que la largeur I ait au moins ladite largeur du bandeau.

Lorsque le bandeau est positionné sur le crochet, il se produit alors, par l'effet de la rétractation du socle dans le caisson, un pincement du bandeau entre l'organe externe de maintien et la paroi, qui a pour effet de maintenir encore plus solidement le bandeau sur le crochet.

Dans des modes de réalisation préférés de l'invention, en l'absence de casque, lorsque le socle est ramené sensiblement entièrement dans le caisson, l'élément anti-dégagement est avantageusement replié entre l'organe externe de maintien et un organe interne de fixation à la paroi.

L'invention concerne un véhicule équipé sur au moins une paroi d'un dispositif pour le support d'un casque tel que décrit ci-avant.

La description détaillée de l'invention est faite en référence aux figures qui représentent :
Figure 1, déjà citée, un exemple d'un dispositif pour le support d'un casque suivant l'art antérieur,
Figure 2, une illustration d'un casque stocké dans un support suivant un premier mode de réalisation de l'invention,
Figure 3a, b, c, différentes vues d'un premier mode de réalisation du support de casque suivant l'invention,
Figure 4a, b, c, différentes vues d'un second mode de réalisation d'un support de casque suivant l'invention.
Figure 5, une illustration d'un casque stocké dans un support suivant le second mode de réalisation de l'invention.

Un dispositif suivant l'invention est destiné à recevoir et supporter, contre une paroi d'un véhicule, un casque radio d'un pilote que ce dernier doit conserver à proximité lorsqu'il ne le porte pas sur lui.

Dans la description le terme casque est utilisé pour désigner un tel casque radio.

Le casque 5 comporte, de manière connue en soi et comme illustré sur la figure 2, un bandeau serre-tête dit bandeau 51 solidaire de deux écouteurs 52, le bandeau 51 étant conformé pour enserrer la tête du pilote, de manière à ce que chaque écouteur soit placé pour couvrir une oreille.

Pour des raisons de confort essentiellement, le bandeau 51 est relativement large de sorte à présenter une surface d'appui sur le sommet de la tête suffisante pour porter le poids des écouteurs sans générer de pression excessive.

Les exemples de réalisation du dispositif, illustré sur les figures 2 à 5, sont décrits dans le cadre d'un dispositif destiné à être fixé sur une paroi 6 d'un poste de pilotage d'un aéronef, par exemple comme illustré sur la figure 2 sur un habillage d'un montant structural, mais l'invention est aussi applicable à tout type de véhicule de transport soumis à des évènements extérieurs, tels que par exemple des turbulences, des accélérations verticales et ou des vibrations pouvant éjecter le casque de son support.

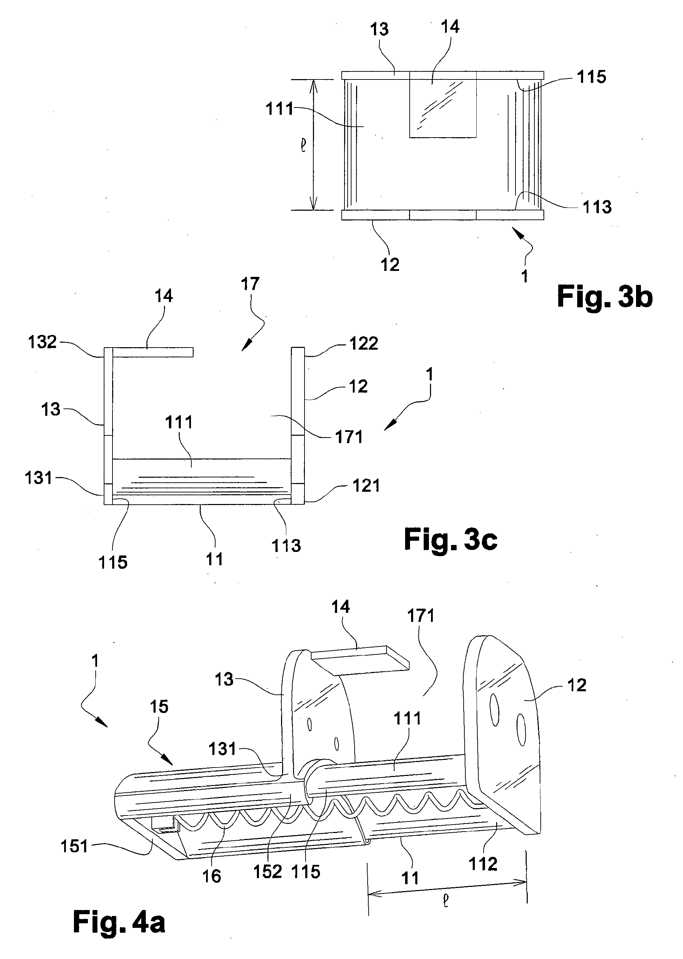

Suivant l'invention, le dispositif 1 pour le support d'un casque sur une paroi 6 comporte, comme illustré sur les figures 3a à 3c qui représentent différentes vues d'un premier mode de réalisation d'un dispositif (et sur lesquelles le casque n'est pas représenté) :
- un socle, présentant de préférence la forme d'une plaque, dite plaque de réception 11, comportant une première face, dite face de réception 111, pour recevoir une partie sensiblement centrale du bandeau 51 du casque 5,
- un organe externe 12, présentant également de préférence la forme d'une plaque, de maintien de la partie centrale du bandeau sur la face de réception 111 en formant une butée lors d'un déplacement du bandeau sur la plaque de réception dans une direction opposée à la direction de la paroi 6, l'ensemble plaque de réception - organe externe de maintien formant un crochet 10,
- un organe interne 13, présentant de préférence la forme d'une plaque, de fixation du dispositif 1 sur la paroi 6,
- une ouverture 17, pour introduire et ou retirer le bandeau de la face de réception 111, située entre l'organe externe 12 et l'organe interne 13.

La face de réception 111 présente, sur une vue de dessus comme illustrée sur la figure 3b, de préférence une forme sensiblement rectangulaire, de largeur I.

L'organe externe de maintien 12 est solidaire à une première extrémité 121 d'une extrémité avant, dite premier bord longitudinal 113, de la plaque de réception 11.

L'organe interne de fixation 13, est solidaire à une première extrémité 131 d'une extrémité arrière, dite second bord longitudinal 115, de la plaque de réception 11, opposée au premier bord longitudinal 113 suivant la largeur I.

Dans une forme non limitative de réalisation, afin de réduire l'encombrement du dispositif dans le poste de pilotage, les plaques formant les organes interne 13 et externe 12 sont sensiblement parallèles entre elles de part et d'autre des bords longitudinaux 113, 115 de la plaque de réception.

Pour éviter le risque d'un dégagement du casque hors du dispositif en cas de turbulence ou d'accélération verticale, le dispositif 1 comporte en outre, au niveau d'une extrémité libre 132 de l'organe interne 13, opposée à la première extrémité 131, un élément anti-dégagement 14 qui obture tout ou partie de l'ouverture 17, formant un logement 171 au moins partiellement refermé pour le casque 5.

L'élément anti-dégagement 14 comporte une position d'obturation stable d'au moins une surface suffisante pour empêcher le passage du bandeau 51 à travers l'ouverture 17. Les caractéristiques dudit élément anti-dégagement, en particulier sa rigidité, sont telles que celui-ci reste dans la position d'obturation stable lorsqu'il est soumis à une force exercée par le casque sous l'effet des forces d'inertie suite, par exemple, à une turbulence. Ses caractéristiques sont cependant telles qu'il peut être déplacé par une action manuelle du pilote dans une position de libération permettant le passage du bandeau du casque à travers ladite ouverture.

L'élément anti-dégagement 14 peut être une sangle dont une extrémité libre opposée à une extrémité fixée au dispositif 1, au niveau de l'organe de maintien externe, se fixe à la paroi 6 au moyen par exemple d'un bouton pression, de manière à obturer l'ouverture 17.

Dans un exemple de réalisation, l'élément anti-dégagement est réalisé dans un matériau présentant des propriétés de déformation élastiques, par exemple un élastomère. Il présente une rigidité suffisante pour empêcher le dégagement du casque par lui-même hors du crochet, mais suffisamment faible pour pouvoir introduire manuellement le casque dans son logement dans le crochet ou l'en retirer en déformant ledit élément anti-dégagement.

Dans un exemple préférentiel de réalisation, l'élément anti-dégagement 14 est une languette s'étendant dans la position d'obturation stable sensiblement parallèlement à la face de réception 111, dans un plan rejoignant les extrémités libres respectives 132, 122, des organes interne 13 et externe 12.

L'élément anti-dégagement est par exemple réalisé dans un matériau élastomère, tel que le caoutchouc, apte à se déformer.

Dans un autre exemple de réalisation, le dispositif 1 comporte des moyens d'articulation à ressort au niveau de l'extrémité libre 132 de l'organe interne 13, permettant un basculement de l'élément anti-dégagement 14 sous l'effet d'une poussée puis un retour dans sa position initiale d'obturation stable lorsque la poussée n'est plus exercée.

Les moyens d'articulation à ressort sont tarés de sorte qu'une action manuelle puisse faire basculer sans difficulté l'élément anti-dégagement pour introduire ou extraire le bandeau du casque du dispositif mais de sorte qu'une force exercée par le bandeau du casque sous l'effet d'une accélération ne puisse faire basculer l'élément anti-dégagement.

Par commodité d'accès pour le pilote, l'élément anti-dégagement 14 est positionné sur l'organe interne 13 mais ledit élément anti-dégagement peut également être positionné sur une extrémité libre 122 de l'organe externe 12, opposée à la première extrémité 121, solution non illustrée.

De préférence, afin d'augmenter la surface de contact du casque sur le dispositif et ainsi d'apporter un maintien amélioré en position du casque pendant les différentes phases de vol ainsi que sous conditions turbulentes et de limiter des risques d'endommager le bandeau, la face de réception 111 est conformée dans sa longueur pour épouser la forme arrondie du bandeau 51 du casque 5.

De préférence, afin de limiter le risque de blessure et ou de chocs pour le pilote et afin de faciliter le passage du bandeau lorsque le casque est placé sur ou retiré du dispositif, l'organe externe 12 présente un contour arrondi.

Le dispositif 1 est fixé à la paroi 6 par tout moyen conventionnel, notamment par collage ou vissage.

Dans un exemple de réalisation où le dispositif est vissé dans la paroi, l'organe interne 13 présente au moins un orifice de fixation 135 apte à être traversé par une vis de fixation. L'organe externe 12 présente au moins un, de préférence un nombre identique à celui des orifices 135 de l'organe interne 13, orifice 125, placé en regard desdits orifices 135 et de diamètre adapté au passage d'un outil de serrage de la vis de fixation.

Sur les figures 3a à 3c, et à titre non limitatif de l'invention, les organes interne 13 et externe 12 comportent chacun deux orifices pour le passage et la fixation du dispositif à la paroi par deux vis.

Dans un mode de réalisation amélioré, illustré sur les figures 4a à 5, l'organe interne 13 n'est plus solidaire de manière fixe du second bord longitudinal 115 de la plaque de réception 11 et le dispositif 1 comporte avantageusement, au niveau de la première extrémité 131 de l'organe interne 13, des moyens de coulissement de la plaque de réception, par exemple un caisson 15, de préférence sensiblement homothétique de la plaque de réception 11. Le caisson 15 est assemblé au second bord longitudinal115 de la plaque de réception et est réalisé de sorte que la plaque de réception 11 est montée coulissante dans le caisson formant glissière. La plaque de réception 11 est au moins en partie rétractable à l'intérieur du caisson 15.

Ainsi la largeur I du logement 171 est variable suivant la position relative de la plaque de réception 11 par rapport aux moyens de coulissement.

Lorsque le dispositif 1 est fixé sur une paroi 6, le caisson 15 est avantageusement intégré dans l'épaisseur de ladite paroi (non représentée sur les figures), en particulier dans l'habillage de ladite paroi.

La plaque de réception 11 présente une dimension suivant la direction de coulissement minimale, nécessaire pour écarter suffisamment l'organe externe 12 de l'organe interne 13 afin que le bandeau 51 du casque 5 puisse être introduit par l'ouverture 17, le cas échéant en escamotant l'élément anti-dégagement.

Le dispositif 1 comporte en outre des moyens automatiques 16 de rétractation de la plaque de réception 11 sensiblement entièrement intégrés dans le caisson 15 et étirables de sorte à autoriser, dans une position sortie de la plaque de réception, une largeur 1 entre les organes interne et externe au moins égale à une largeur du bandeau 51 du casque 5. Les moyens automatiques de rétractation 16 sont par exemple un ressort de rappel et ils sont de préférence positionnés du coté d'une deuxième face 112 de la plaque de réception 11, opposée à la face de réception 111, entre une extrémité arrière 151 du caisson, opposée à une extrémité avant 152 solidaire de l'organe interne 13, et l'organe externe 12.

Lesdits moyens automatiques de rétractation 16 sont dans une position rétractée ou faiblement étirée lorsque l'organe externe 12 est sensiblement contre l'organe interne 13, lorsque le casque n'est pas posé sur le dispositif, et dans une position étirée lorsque l'organe externe 12 est éloigné dudit organe interne de fixation 13, en particulier lorsque le casque est posé sur le dispositif.

Dans la position rétractée, les organes interne 13 et externe 12 sont rapprochés sous l'effet des moyens de rétractation 16 et ledit organe externe est maintenu en butée, dans la configuration illustrée, contre l'élément anti-dégagement 14.

Dans un mode de réalisation préféré qui minimise les dimensions du dispositif lorsque le casque est retiré, l'élément anti-dégagement 14 est placé dans une position repliée de sorte que les organes interne 13 et externe 12 sont séparés sensiblement par une épaisseur de l'élément anti-dégagement 14 qui a été replié contre l'organe interne de fixation, avantageusement sous l'action de l'organe externe 12.

De préférence, l'élément anti-dégagement 14 peut présenter une légère inclinaison par rapport à l'organe interne de fixation 13 vers la face de réception 111 de sorte à faciliter le repliement dudit élément anti-dégagement lorsque l'organe externe 12 revient vers l'organe interne 13 sous l'effet des moyens automatiques de rétractation 16.

Les moyens automatiques de rétractation 16 sont choisis de sorte qu'une action manuelle puisse écarter sans difficulté l'organe externe 12 de l'organe interne 13 pour introduire le bandeau du casque dans le logement 15 mais également de sorte que lesdits moyens automatiques de rétractation ne puissent se détendre et écarter l'organe externe 12 sous l'effet des turbulences seules, y compris lorsqu'un casque est posé sur le dispositif.

Avantageusement, les efforts de traction à exercer sont tels qu'ils peuvent être exercés sans difficulté en utilisant une seule main pour tirer l'organe externe 12.

Dans une forme de réalisation, la deuxième face 112 de la plaque de réception 11 est conformée de sorte à être sensiblement identique à la face de réception 111 de sorte à loger et masquer, sous la partie arrondie, les moyens automatiques de rétractation 16.

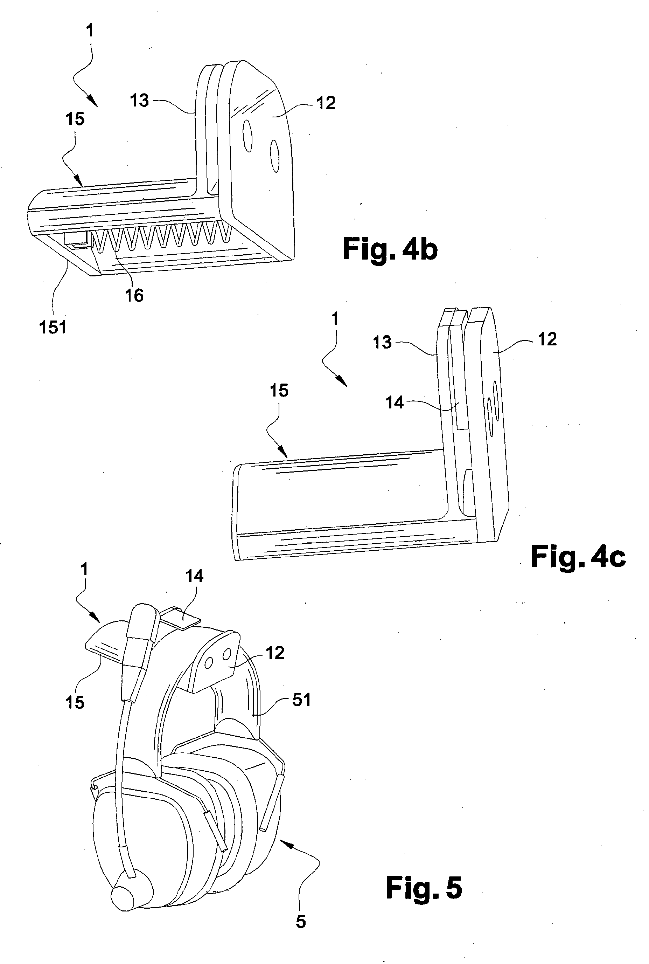

Lorsque le pilote utilise son casque, le dispositif 1 est dans une position dite rétractée. L'organe externe 12 est au plus près de l'organe interne 13, comme illustré sur les figures 4b et 4c.

Lorsque le pilote pose son casque sur le dispositif 1, il tire sur l'organe externe 12. Les moyens automatiques de rétractation 16, qui maintenaient l'organe externe 12 sensiblement contre l'organe interne 13, sont étirés.

Simultanément à l'écartement de l'organe externe 12 par rapport à l'organe interne 13, l'élément anti-dégagement 14 revient dans sa position initiale d'obturation du logement 171.

Le pilote éloigne suffisamment l'organe externe 12 de sorte que l'ouverture 17, le cas échéant en association avec un effacement au moins partiel de l'élément anti-dégagement 14, soit suffisante pour permettre l'introduction du bandeau 51 dans le logement 171.

Lorsque l'ouverture est suffisante, tout en retenant l'organe externe 12 en position, le pilote introduit le bandeau 51 dans l'ouverture 17.

Lorsque le bandeau 51 est posé sur la face de réception 111 du dispositif 1, le pilote relâche l'organe externe 12. Les moyens automatiques de rétractation 16 tendent à rapprocher à nouveau les organes interne 13 et externe 12 jusqu'à être immobilisés l'un par rapport à l'autre par le bandeau, comme illustré sur la figure 5.

Les moyens automatiques de rétractation 16 permettent ainsi, en complément de l'élément anti-dégagement 14, d'améliorer la qualité du maintien du bandeau 51 dans le logement 15.

Ce mode de réalisation permet avantageusement, outre d'améliorer le maintien du casque dans le dispositif, de réduire l'encombrement du dispositif lorsque ledit dispositif ne supporte pas le casque. Cette réduction d'encombrement permet d'une part de limiter le risque de blessure et / ou de chocs à la tête lors de mouvements dans une zone proche du dispositif, et d'autre part d'apporter une meilleure robustesse au dispositif en diminuant le risque de détérioration du dispositif sous l'effet d'un choc.

Ce mode de réalisation permet également avantageusement, tout en conservant l'efficacité de l'élément anti-dégagement, d'adapter le dispositif à différentes largeurs de bandeau de casque.

La présente invention ne se limite pas aux exemples décrits ci-dessus. L'homme du métier est en mesure d'adapter la forme et la section des éléments du dispositif à des formes et sections non décrites.

Le dispositif suivant l'invention permet ainsi à un pilote de stocker de manière sécurisée son casque lorsqu'il le souhaite.

## Revendications

1. Véhicule équipé sur au moins une paroi (6) d'un dispositif (1) pour le support d'un casque (5) le long de ladite paroi (6) du véhicule, ce dispositif comportant un crochet (10) présentant un socle (11) de réception d'un bandeau (51) du casque (5), ledit socle étant solidaire à une extrémité avant opposée (113) d'un organe externe (12) de maintien dudit bandeau sur ledit socle, et ledit crochet présentant une ouverture (17), entre une extrémité arrière et l'organe externe de maintien (12), de largeur I au moins égale à une largeur du bandeau (51), autorisant le passage dudit bandeau vers le socle (11) ou en éloignement dudit socle, **caracterisé en ce que** le dispositif comporte un élément anti-dégagement (14) obturant l'ouverture (17) sur au moins une largeur suffisante pour empêcher le passage du bandeau, lorsqu'il est posé sur le socle, hors du dispositif à travers l'ouverture, ledit élément anti-dégagement étant apte être déplacé par une action manuelle, directement sur ledit élément anti dégagement ou par l'intermédiaire du casque, dans une position de libération pour permettre ledit passage, le socle (11) étant fixé transversalement à la paroi (6) par l'extrémité arrière (115).

2. Véhicule suivant la revendication 1 dans lequel l'élément anti-dégagement (14) est une languette s'étendant sensiblement parallèlement au socle.

3. Véhicule suivant l'une des revendications précédentes dans lequel l'élément anti-dégagement (14) est apte à être replié en direction du socle (11) de manière à libérer ladite ouverture (17).

4. Véhicule suivant l'une des revendications précédentes dans lequel l'élément anti-dégagement (14) occupe une partie de la largeur I de l'ouverture (17) entre l'extrémité arrière (115) dudit socle et l'organe de maintien (12).

5. Véhicule suivant l'une des revendications précédentes dans lequel l'élément anti-dégagement (14) est réalisé dans un matériau présentant des propriétés de déformation élastique.

6. Véhicule suivant l'une des revendications précédentes comportant un organe interne (13) de fixation du socle (11) à la paroi (6), solidaire du socle (11) au niveau de l'extrémité arrière (115) dudit socle.

7. Véhicule suivant l'une des revendications précédentes dans lequel le socle (11) est une plaque conformée pour épouser localement la forme du bandeau (51) du casque (5).

8. Véhicule suivant l'une des revendications précédentes dans lequel l'organe externe de maintien (12) présente un contour arrondi.

9. Véhicule suivant l'une des revendications précédentes dans lequel le socle (11) est au moins en partie rétractable à l'intérieur d'un caisson (15) dudit dispositif destiné à être disposé dans une épaisseur de la paroi (6), ledit caisson étant solidaire du socle (11) par l'extrémité arrière (115) dudit socle, et dans lequel ledit dispositif comporte des moyens automatiques (16) de rétractation du socle (11) dans le caisson (15) de manière à amener, en absence de sollicitation externe et de présence d'un casque (5), l'organe externe de maintien (12) à une distance de ladite extrémité arrière (115) correspondant à une largeur I de l'ouverture (17) au moins inférieure à une largeur du bandeau (51) du casque (5) destiné à être maintenu dans ledit dispositif, et qui sont étirables de manière à déployer ledit socle hors du caisson (15) de sorte que ladite largeur I ait au moins ladite largeur du bandeau (51).

## Patentansprüche

1. Fahrzeug, das auf mindestens einer Wand (6) mit einer Vorrichtung (1) zum Halten eines Kopfhörers (5) entlang der Wand (6) des Fahrzeugs ausgestattet ist, wobei diese Vorrichtung einen Haken (10) aufweist, der einen Sockel (11) zum Aufnehmen eines Bands (51) des Kopfhörers (5) aufweist, wobei der Sockel fest an einem vorderen Ende (113) gegenüber einem externen Organ (12) zum Halten des Bands auf dem Sockel verbunden ist, und wobei der Haken eine Öffnung (17) zwischen einem hinteren Ende und dem externen Halteorgan (12) mit Breite 1 mindestens gleich einer Breite des Bands (51) aufweist, das das Durchgehen des Bands zu dem Sockel (11) oder Entfernen von dem Sockel gestattet, **dadurch gekennzeichnet, dass** die Vorrichtung ein Freigabeschutzelement (14), das die Öffnung (17) auf mindestens einer Breite verschließt, die ausreicht, um das Durchgehen des Bands zu verhindern, aufweist, wenn es auf dem Sockel, außerhalb der Vorrichtung durch die Öffnung abgelegt wird, wobei das Freigabeschutzelement geeignet ist, um durch eine manuelle Aktion direkt auf dem Freigabeschutzelement oder über den Kopfhörer in eine Freigabeposition verlagert zu werden, um das Durchgehen zu erlauben, wobei der Sockel (11) quer an der Wand (6) durch das hintere Ende (115) befestigt ist.

2. Fahrzeug nach Anspruch 1, bei dem das Freigabeschutzelement (14) eine Lasche ist, die sich im Wesentlichen parallel zu dem Sockel erstreckt.

3. Fahrzeug nach einem der vorhergehenden Ansprüche, bei dem das Freigabeschutzelement (14) angepasst ist, um in Richtung des Sockels (11) derart zurückgeklappt zu werden, dass die Öffnung (17) freigegeben wird.

4. Fahrzeug nach einem der vorhergehenden Ansprüche, bei dem das Freigabeschutzelement (14) einen Teil der Breite 1 der Öffnung (17) zwischen dem hinteren Ende (115) des Sockels und dem Halteorgan (12) belegt.

5. Fahrzeug nach einem der vorhergehenden Ansprüche, bei dem das Freigabeschutzelement (14) aus einem Material hergestellt ist, das elastische Verformungseigenschaften aufweist.

6. Fahrzeug nach einem der vorhergehenden Ansprüche, das ein inneres Organ (13) zum Befestigen des Sockels (11) an der Wand (6) aufweist, das fest mit dem Sockel (11) im Bereich des hinteren Endes (115) des Sockels verbunden ist.

7. Fahrzeug nach einem der vorhergehenden Ansprüche, bei dem der Sockel (11) eine Platte ist, die ausgebildet ist, um sich lokal an die Form des Bands (51) des Kopfhörers (5) zu schmiegen.

8. Fahrzeug nach einem der vorhergehenden Ansprüche, bei dem das externe Halteorgan (12) eine abgerundete Kontur aufweist.

9. Fahrzeug nach einem der vorhergehenden Ansprüche, bei dem der Sockel (11) mindestens teilweise in das Innere eines Gehäuses (15) der Vorrichtung einziehbar ist, die dazu bestimmt ist, in einer Stärke der Wand (6) angeordnet zu werden, wobei das Gehäuse fest mit dem Sockel (11) durch das hintere Ende (115) des Sockels verbunden ist, und bei dem die Vorrichtung automatische Mittel (16) zum Zurückziehen des Sockels (11) in das Gehäuse (15) aufweist, so dass bei Fehlen externer Beanspruchung und Gegenwart eines Kopfhörers (5) das externe Halteorgan (12) in eine Entfernung von dem hinteren Ende (115) gebracht wird, die einer Breite 1 der Öffnung (17) entspricht, die mindestens kleiner ist als eine Breite des Bands (51) des Kopfhörers (5), das dazu bestimmt ist, in der Vorrichtung gehalten zu werden, und die derart dehnbar sind, dass der Sockel aus dem Gehäuse (15) derart entfaltet wird, dass die Breite 1 mindestens die Breite des Bands (51) hat.

## Claims

1. Vehicle equipped on at least one wall (6) with a device (1) for supporting a headset (5) along the said wall (6) of the vehicle, this device comprising a hook (10) having a base (11) for receiving a headband (51) of the headset (5), the said base being secured at an opposite front end (113) to an external member (12) for retaining the said headband on the said base, and the said hook having an opening (17), between a rear end and the external retaining member (12), with a width 1 at least equal to a width of the headband (51), allowing the passage of the said headband towards the base (11) or away from the said base, **characterized in that** the device comprises an anti-release element (14) blocking the opening (17) over at least a width sufficient to prevent the passage of the headband, when it is placed on the base, out of the device through the opening, the said anti-release element being able to be moved by a manual action, directly on the said anti-release element or via the headset, into a release position to allow the said passage, the base (11) being fixed transversely to the wall (6) by the rear end (115).

2. Vehicle according to Claim 1, in which the anti-release element (14) is a tab extending substantially parallel to the base.

3. Vehicle according to either of the preceding claims, in which the anti-release element (14) is able to be folded in the direction of the base (11) so as to free the said opening (17).

4. Vehicle according to one of the preceding claims, in which the anti-release element (14) occupies a part of the width 1 of the opening (17) between the rear end (115) of the said base and the retaining member (12).

5. Vehicle according to one of the preceding claims, in which the anti-release element (14) is made of a material having elastic deformation properties.

6. Vehicle according to one of the preceding claims, comprising an internal member (13) for fastening the base (11) to the wall (6), which member is secured to the base (11) at the rear end (115) of the said base.

7. Vehicle according to one of the preceding claims, in which the base (11) is a plate shaped to follow locally the shape of the headband (51) of the headset (5).

8. Vehicle according to one of the preceding claims, in which the external retaining member (12) has a rounded contour.

9. Vehicle according to one of the preceding claims, in which the base (11) is at least partly retractable inside a casing (15) of the said device that is intended to be arranged in a thickness of the wall (6), the said casing being secured to the base (11) at the rear end (115) of the said base, and in which the said device comprises automatic means (16) for retracting the base (11) into the casing (15) so as, in the absence of external stress and in the presence of a headset (5), to bring the external retaining member (12) to a distance from the said rear end (115) corresponding to a width 1 of the opening (17) at least less than a width of the headband (51) of the headset (5) intended to be retained in the said device, and which means are stretchable so as to deploy the said base out of the casing (15) such that the said width 1 has at least the said width of the headband (51).
